# EUROPEAN PATENT SPECIFICATION

(11) **EP 3 559 819 B1**
(45) Date of publication and mention of the grant of the patent: **09.03.2022**
(21) Application number: 18866467.6
(22) Date of filing: 29.12.2018
(51) Int. Cl.: G06F 16/904, H04L 9/32

(54) **VISUAL BLOCKCHAIN BROWSER**
VISUELLER BLOCKCHAIN-BROWSER
NAVIGATEUR DE CHAÎNE DE BLOCS VISUEL

(43) Date of publication of application: 30.10.2019
(73) Proprietor: Advanced New Technologies Co., Ltd., George Town, Grand Cayman KY1-9008 (KY)
(72) Inventor: LI, Yanpeng, Zhejiang 311121 (CN)
(74) Representative: Fish & Richardson P.C.
(86) International application number: PCT/CN2018/125183
(87) International publication number: WO 2019/072309

(56) References cited:
- CN-A- 106 453 377
- CN-A- 107 085 582
- CN-A- 107 317 725
- CN-A- 107 888 429
- CN-A- 108 134 819
- CN-A- 108 874 634
- CN-S- 304 519 171
- US-A1- 2018 129 958
- OGGIER FREDERIQUE ET AL: "BiVA: Bitcoin Network Visualization & Analysis", 2018 IEEE INTERNATIONAL CONFERENCE ON DATA MINING WORKSHOPS (ICDMW), IEEE, 17 November 2018 (2018-11-17), pages 1469-1474, XP033516152, DOI: 10.1109/ICDMW.2018.00210 [retrieved on 2019-02-07]

## Description

### BACKGROUND

Distributed ledger systems (DLSs), which can also be referred to as consensus networks, and/or blockchain networks, enable participating entities to securely, and immutably store data. DLSs are commonly referred to as blockchain networks without referencing any particular user case. Example types of blockchain networks can include public blockchain networks, private blockchain networks, and consortium blockchain networks. A public blockchain network is open for all entities to use the DLS, and participate in the consensus process. A private blockchain network is provided for a particular entity, which centrally controls read and write permissions. A consortium blockchain network is provided for a select group of entities, which control the consensus process, and includes an access control layer.

A blockchain network maintains one or more blockchains. A blockchain is a data structure for storing data that prevents tampering and manipulation of the data by malicious parties (described in greater detail below). Data stored in the blockchain can include complex values, such as hash values, and viewing data of a blockchain in a text-only format can be challenging and unintuitive, for non-technical as well as technical users. If blockchain information is displayed using linear lists of information, finding information and viewing relationships between related data can be difficult. Continued viewing of a linear list of information can cause undesirable visual fatigue and frustration. US 2018/0129958 A1 describes a method, system and computer-usable medium for providing cognitive insights comprising receiving data from a plurality of data sources, the plurality of data sources comprising a blockchain data source, the blockchain data source providing blockchain data; processing the data from the plurality of data sources, the processing the data from the plurality of data sources performing data enriching to provide enriched data; generating the cognitive session graph, the cognitive session graph being associated with a session, the cognitive session graph comprising at least some enriched data; and, associating a cognitive blockchain with the cognitive session graph. CN 107888429 A describes a blockchain operation status visualization method, device, and browser including a real-time display (of, e.g., initiator and dissemination processes of blockchain transactions, input consensus processes and current out of block, output consensus processes). Oggier Frederique et al.: "BiVA: Bitcoin Network Visualization & Analysis", 2018 IEEE International Conference On Data Mining Workshops (ICDMW), IEEE, 17 November 2018 (2018-11-17), pages 1469-1474) describe a graph mining tool, BiVA, for visualization and analysis of a Bitcoin network. BiVa enables data exploration, visualization of subgraphs around nodes of interest, and integrates both standard and new algorithms, including a general algorithm for flow based clustering for directed graphs, and other Bitcoin network specific wallet address aggregation mechanisms. The BiVA user interface makes it easy to get started with a basic visualization that gives insights into nodes of interests, and the tool is modular, allowing easy integration of new algorithms. Its functionalities are demonstrated with a case study of extortion of Ashley Madison data breach victims.

### SUMMARY

The invention is defined in the appended claims. Implementations of this specification include computer-implemented methods for visualizing blockchain data. More particularly, implementations of this specification are directed to providing a blockchain browser for graphical viewing and navigation of blockchain data. In some implementations, actions include: receiving, from a client device, a request for a blockchain visualization user interface; generating the blockchain visualization user interface based on the blockchain, the blockchain visualization user interface including a chain graph structure that visually depicts at least a portion of the blockchain and transaction information for transactions that have occurred in the blockchain network; and providing the blockchain visualization user interface for display on the client device in response to the request for the blockchain visualization user interface.

Other implementations include corresponding systems, apparatus, and computer programs, configured to perform the actions of the methods, encoded on computer storage devices.

These and other implementations may each optionally include one or more of the following features:

The chain graph structure can include a chain of selectable block representations that each represent a block in the blockchain. A request for a block details user interface can be received in response to a user selection of a particular block representation that corresponds to a particular block in the blockchain. Block information for the particular block can be retrieved from the consensus version of the blockchain. A consensus version of a blockchain can be determined based on interacting with nodes of a blockchain network. For example, a web server that is a node of the blockchain network can use a longest-chain and/or a heaviest-chain criteria to select a chain of blocks as the consensus version of the blockchain from among multiple candidate paths. The multiple candidate paths can include different blocks received at different times from different nodes of the blockchain network. The block details user interface can be generated based on the retrieved block information. The block details user interface can be provided in response to the request for the block details user interface. The selectable block representations can be connected with selectable links and the blockchain visualization user interface can be configured to reposition the chain graph structure in response to a user selection of a particular selectable link so that a selectable block representation that is the target of the selected link is positioned at the top of the chain graph structure. The transaction information can include information for most-recent transactions associated with the consensus version of the blockchain. The transaction information can include transaction identifying information for a first transaction. A request for a transaction details user interface for the first transaction can be received in response to a user selection of the transaction identifying information. Transaction information for the first transaction can be retrieved using the consensus version of the blockchain. The transaction details user interface can be generated based on the transaction information for the first transaction. The transaction details user interface can be provided in response to the request for the transaction details user interface. A request for a block list user interface can be received, from the client device. Block information can be retrieved from the consensus version of the blockchain. The block list user interface can be generated based on the retrieved block information. The block list user interface can be provided in response to the request for the block list user interface. A request for a transaction list user interface can be received, from the client device. Transaction information can be retrieved using the consensus version of the blockchain. The transaction list user interface can be generated based on the retrieved transaction information. The transaction list user interface can be provided in response to the request for the transaction list user interface. A request for an account list user interface can be received, from the client device. Account information for the nodes of the blockchain network can be retrieved using the consensus version of the blockchain. The account list user interface can be generated based on the retrieved account information. The account list user interface can be provided in response to the request for the account list user interface. A request for a contract list user interface can be received from the client device. Contract information can be retrieved using the consensus version of the blockchain. The contract list user interface can be generated based on the retrieved contract information. The contract list user interface can be provided in response to the request for the contract list user interface. An updated consensus version of the blockchain can be identified. An updated blockchain visualization user interface can be generated based on the updated consensus version of the blockchain and provided to the client device.

This specification also provides one or more non-transitory computer-readable storage media coupled to one or more processors and having instructions stored thereon which, when executed by the one or more processors, cause the one or more processors to perform operations in accordance with implementations of the methods provided herein.

This specification further provides a system for implementing the methods provided herein. The system includes one or more processors, and a computer-readable storage medium coupled to the one or more processors having instructions stored thereon which, when executed by the one or more processors, cause the one or more processors to perform operations in accordance with implementations of the methods provided herein.

It is appreciated that methods in accordance with this specification may include any combination of the aspects and features described herein. That is, methods in accordance with this specification are not limited to the combinations of aspects and features specifically described herein, but also include any combination of the aspects and features provided.

The details of one or more implementations of this specification are set forth in the accompanying drawings and the description below. Other features and advantages of this specification will be apparent from the description and drawings, and from the claims.

### DESCRIPTION OF DRAWINGS

FIG. 1 depicts an example of an environment that can be used to execute implementations of this specification.
FIG. 2 depicts an example of a conceptual architecture in accordance with implementations of this specification.
FIG. 3 depicts an example of an environment that can be used to execute implementations of this specification.
FIG. 4 depicts an example of a home page user interface in accordance with implementations of this specification.
FIG. 5 depicts an example of a block list user interface in accordance with implementations of this specification.
FIG. 6 depicts an example of a block details user interface in accordance with implementations of this specification.
FIG. 7 depicts an example of a transaction list user interface in accordance with implementations of this specification.
FIG. 8 depicts an example of an account list user interface in accordance with implementations of this specification.
FIG. 9 depicts an example of an account details user interface in accordance with implementations of this specification.
FIG. 10 depicts an example of a contract list user interface in accordance with implementations of this specification.
FIG. 11 depicts an example of a contract details user interface in accordance with implementations of this specification.
FIG. 12 depicts an example of a contract details user interface for transactions in accordance with implementations of this specification.
FIG. 13 depicts an example of a contract details user interface for contract code in accordance with implementations of this specification.
FIG. 14 depicts an example of a process that can be executed in accordance with implementations of this specification.
FIG. 15 depicts examples of modules of an apparatus in accordance with implementations of this specification.

Like reference symbols in the various drawings indicate like elements.

### DETAILED DESCRIPTION

Implementations of this specification include computer-implemented methods for visualizing blockchain data. More particularly, implementations of this specification are directed to providing a blockchain browser for graphical viewing and navigation of blockchain data. In some implementations, actions include: receiving, from a client device, a request for a blockchain visualization user interface; generating the blockchain visualization user interface based on the blockchain, the blockchain visualization user interface including a chain graph structure that visually depicts at least a portion of the blockchain and transaction information for transactions that have occurred in the blockchain network; and providing the blockchain visualization user interface for display on the client device in response to the request for the blockchain visualization user interface.

To provide further context for implementations of this specification, and as introduced above, distributed ledger systems (DLSs), which can also be referred to as consensus networks (e.g., made up of peer-to-peer nodes), and blockchain networks, enable participating entities to securely, and immutably conduct transactions, and store data. The term blockchain is used herein to generally refer to a DLS without reference to any particular use case.

A blockchain is a data structure that stores transactions in a way that the transactions are immutable, and can be subsequently verified. A blockchain includes one or more blocks. Each block in the chain is linked to a previous block immediately before it in the chain by including a cryptographic hash of the previous block. Each block also includes a timestamp, its own cryptographic hash, and one or more transactions. The transactions, which have already been verified by the nodes of the blockchain network, are hashed and encoded into a Merkle tree. A Merkle tree is a data structure in which data at the leaf nodes of the tree is hashed, and all hashes in each branch of the tree are concatenated at the root of the branch. This process continues up the tree to the root of the entire tree, which stores a hash that is representative of all data in the tree. A hash purporting to be of a transaction stored in the tree can be quickly verified by determining whether it is consistent with the structure of the tree.

Whereas a blockchain is a data structure for storing transactions, a blockchain network is a network of computing nodes that manage, update, and maintain one or more blockchains. As introduced above, a blockchain network can be provided as a public blockchain network, a private blockchain network, or a consortium blockchain network. In a public blockchain network, the consensus process is controlled by nodes of the consensus network. For example, hundreds, thousands, even millions of entities can cooperate a public blockchain network, each of which operates at least one node in the public blockchain network. Accordingly, the public blockchain network can be considered a public network with respect to the participating entities. In some examples, a majority of entities (nodes) must sign every block in order for the block to be valid, and added to the blockchain (distributed ledger) of the blockchain network. Example public blockchain networks include particular peer-to-peer payment networks that leverage a distributed ledger, referred to as blockchain. As noted above, the term blockchain, however, is used to generally refer to distributed ledgers without particular reference to any particular blockchain network.

In general, a public blockchain network supports public transactions. A public transaction is shared with all of the nodes within the public blockchain network, and are stored in a global blockchain. A global blockchain is a blockchain that is replicated across all nodes. That is, all nodes are in perfect state consensus with respect to the global blockchain. To achieve consensus (e.g., agreement to the addition of a block to a blockchain), a consensus protocol is implemented within the public blockchain network. Examples of consensus protocols include, without limitation, proof-of-work (POW), proof-of-stake (POS), and proof-of-authority (POA). POW is referenced further herein as a non-limiting example.

In general, a private blockchain network private blockchain network is provided for a particular entity, which centrally controls read and write permissions. The entity controls, which nodes are able to participate in the blockchain network. Consequently, private blockchain networks are generally referred to as permissioned networks that place restrictions on who is allowed to participate in the network, and on their level of participation (e.g., only in certain transactions). Various types of access control mechanisms can be used (e.g., existing participants vote on adding new entities, a regulatory authority can control admission).

In general, a consortium blockchain network is private among the participating entities. In a consortium blockchain network, the consensus process is controlled by an authorized set of nodes, one or more nodes being operated by a respective entity (e.g., a financial institution, insurance company). For example, a consortium of ten (10) entities (e.g., financial institutions, insurance companies) can operate a consortium blockchain network, each of which operates at least one node in the consortium blockchain network. Accordingly, the consortium blockchain network can be considered a private network with respect to the participating entities. In some examples, each entity (node) must sign every block in order for the block to be valid, and added to the blockchain. In some examples, at least a sub-set of entities (nodes) (e.g., at least 7 entities) must sign every block in order for the block to be valid, and added to the blockchain.

Implementations of this specification are described in further detail herein with reference to a blockchain network, which is public among the participating entities. It is contemplated, however, that implementations of this specification can be realized in any appropriate type of blockchain network.

Implementations of this specification are described in further detail herein in view of the above context. More particularly, and as introduced above, implementations of this specification are directed to providing a blockchain browser for graphical viewing and navigation of blockchain data.

A blockchain browser can be provided as a visualization tool for viewing blockchain information. The home page of the blockchain browser can display key data on a blockchain, including node information, transaction information, account information, and contract information. Since blocks are an important part of blockchain information, block information can be highlighted for the user. For instance, block information can be displayed in the blockchain browser in a graphical structure that displays graphical connections of related blocks. Such a graphical approach can result in a convenient and intuitive visual display of the relationship between blocks in the blockchain, allowing users to visually experience and navigate the chain structure of a blockchain. A user can select graphical links that connect related blocks to visually navigate through the blockchain.

The graphical structure can be combined with textual displays. For example, block information can be displayed directly on a graphical representation of a block, and further block details can be displayed in response to selection of a block representation. Within the blockchain browser, users can select block, account, transaction, or contract identifying information, to view detailed information about a respective block, account, transaction, or contract. The blockchain browser can be useful for both users who are technical and knowledgeable about blockchain details, and non-technical users who aren't as familiar with technical blockchain details.

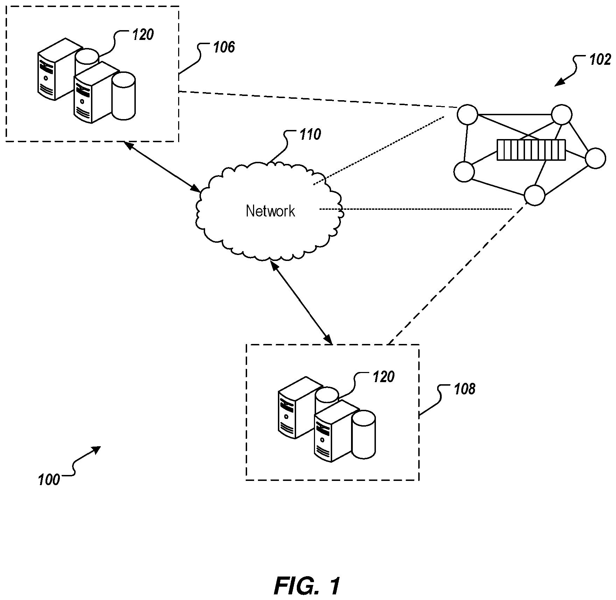

FIG. 1 depicts an example environment 100 that can be used to execute implementations of this specification. In some examples, the example environment 100 enables entities to participate in a blockchain network 102. The blockchain network 102 can be a public, private, or consortium blockchain network. The example environment 100 includes computing devices 106, 108, and a network 110. In some examples, the network 110 includes a local area network (LAN), wide area network (WAN), the Internet, or a combination thereof, and connects web sites, user devices (e.g., computing devices), and back-end systems. In some examples, the network 110 can be accessed over a wired and/or a wireless communications link. In general the network 110 represents one or more communication networks. In some cases, the computing devices 106, 108 can be nodes of a cloud computing system (not shown), or can each computing device 106, 108 be a separate cloud computing system including a plurality of computers interconnected by a network and functioning as a distributed processing system.

In the depicted example, the computing systems 106, 108 can each include any appropriate computing system that enables participation as a node in the blockchain network 102. Example computing devices include, without limitation, a server, a desktop computer, a laptop computer, a tablet computing device, and a smartphone. In some examples, the computing systems 106, 108 hosts one or more computer-implemented services for interacting with the blockchain network 102. For example, the computing system 106 can host computer-implemented services of a first entity (e.g., user A), such as transaction management system that the first entity uses to manage its transactions with one or more other entities (e.g., other users). The computing system 108 can host computer-implemented services of a second entity (e.g., user B), such as transaction management system that the second entity uses to manage its transactions with one or more other entities (e.g., other users). In the example of FIG. 1, the blockchain network 102 is represented as a peer-to-peer network of nodes, and the computing systems 106, 108 provide nodes of the first entity, and second entity respectively, which participate in the blockchain network 102.

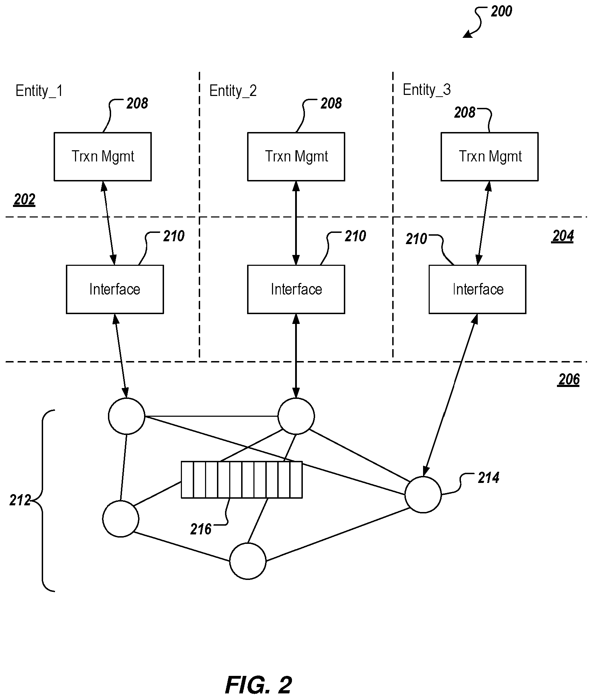

FIG. 2 depicts an example conceptual architecture 200 in accordance with implementations of this specification. The example conceptual architecture 200 includes an entity layer 202, a hosted services layer 204, and a blockchain network layer 206. In the depicted example, the entity layer 202 includes three entities, Entity_1 (E1), Entity_2 (E2), and Entity_3 (E3), each entity having a respective transaction management system 208.

In the depicted example, the hosted services layer 204 includes interfaces 210 for each transaction management system 210. In some examples, a respective transaction management system 208 communicates with a respective interface 210 over a network (e.g., the network 110 of FIG. 1) using a protocol (e.g., hypertext transfer protocol secure (HTTPS)). In some examples, each interface 210 provides communication connection between a respective transaction management system 208, and the blockchain network layer 206. More particularly, the interface 210 communicates with a blockchain network 212 of the blockchain network layer 206. In some examples, communication between an interface 210, and the blockchain network layer 206 is conducted using remote procedure calls (RPCs). In some examples, the interfaces 210 "host" blockchain network nodes for the respective transaction management systems 208. For example, the interfaces 210 provide the application programming interface (API) for access to blockchain network 212.

As described herein, the blockchain network 212 is provided as a peer-to-peer network including a plurality of nodes 214 that immutably record information in a blockchain 216. Although a single blockchain 216 is schematically depicted, multiple copies of the blockchain 216 are provided, and are maintained across the blockchain network 212. For example, each node 214 stores a copy of the blockchain. In some implementations, the blockchain 216 stores information associated with transactions that are performed between two or more entities participating in the blockchain network.

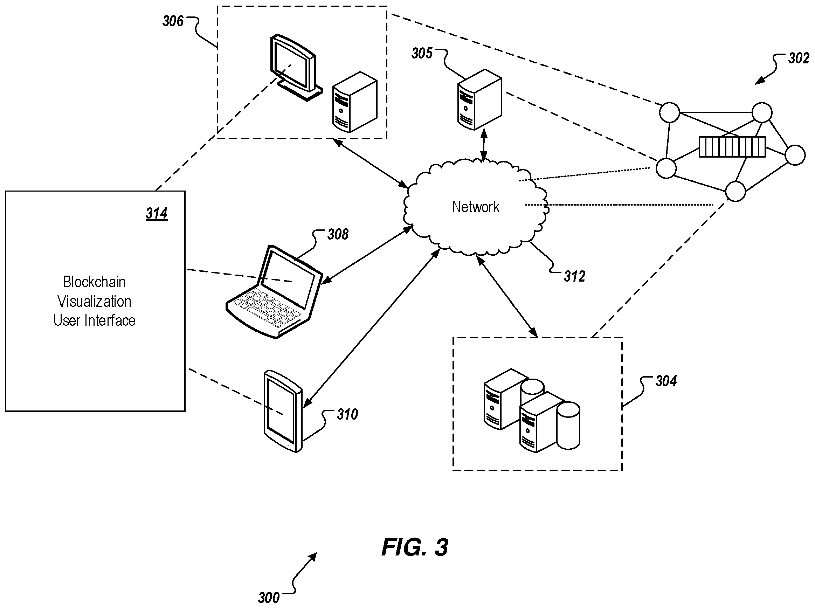

FIG. 3 depicts an example environment 300 that can be used to execute implementations of this specification. In some examples, the example environment 300 enables entities to participate in a blockchain network 302. The example environment 300 includes computing devices 304, 305, 306, 308, 310, and a network 312. In some examples, the network 312 includes a local area network (LAN), wide area network (WAN), the Internet, or a combination thereof, and connects web sites, user devices (e.g., computing devices), and back-end systems. In some examples, the network 310 can be accessed over a wired and/or a wireless communications link.

In the depicted example, the computing devices 304, 305, and 306 can each include any appropriate computing system that enables participation as a node in the blockchain network 302. Each of the computing devices 304, 305, and 306 can store a copy of a blockchain maintained by the blockchain network 302. The computing device 304 can be or include a web server that is configured to provide a blockchain browser for visualizing information of the blockchain network 302.

In some implementations, the computing device 304 does not participate in block validation, but monitors the blockchain network 302 to determine when a consensus version of the blockchain has been reached by other participating nodes, including the computing devices 305 and 306. The computing device 304 can store a consensus version of the blockchain, for use in generating a blockchain visualization user interface.

The computing device 304 can receive a request for a blockchain visualization user interface from a client device such as the computing device 308 or the computing device 310. In some implementations, a node of the blockchain network 302 can function as a client device. For example, a user of the computing device 306 can use a browser running on the computing device 306 to send a request to the computing device 304 for the blockchain visualization user interface.

In response to a request for the blockchain visualization user interface, the computing device 304 can generate the blockchain visualization user interface (e.g., as a web page), based on the stored consensus version of the blockchain, and send the generated blockchain visualization user interface to a requesting client device. If the blockchain network 302 is a private or consortium blockchain network, the request for the blockchain visualization user interface can include user authorization information, which can be verified by the computing device 304 before the blockchain visualization user interface is generated and sent to the requesting client device.

The blockchain visualization user interface can be displayed on the requesting client device (e.g., as illustrated as a displayed user interface 314). As described in more detail below, the displayed user interface 314 can be updated to reflect new information in a new consensus version of the blockchain. Additionally, user interaction with the displayed user interface 314 can result in requests for other user interfaces, such as for displaying block lists, block details, transaction lists, transaction details, account lists, account details, contract lists, contract details, or search results pages resulting from user searches for blockchain network information.

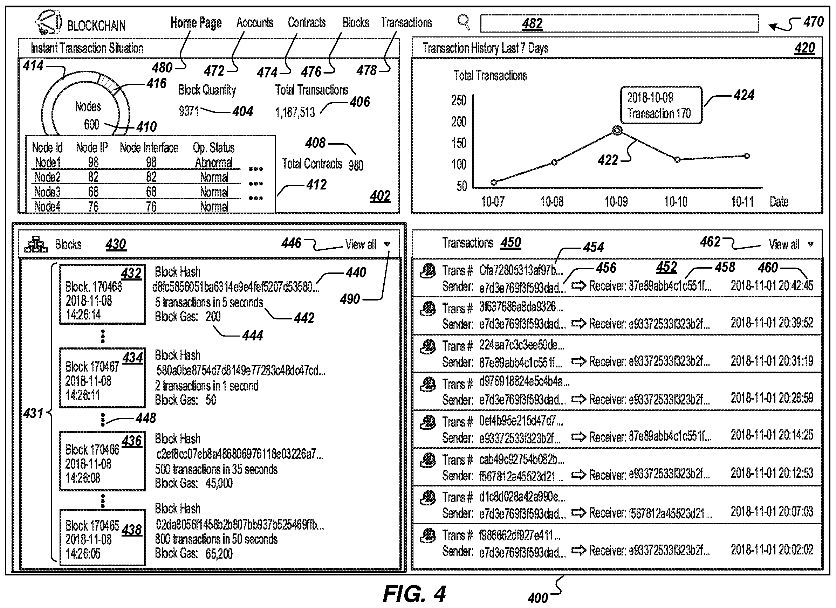

FIG. 4 depicts an example home page user interface 400 in accordance with implementations of this specification. The home page user interface 400 can be an initial page that is displayed when a client device sends a request to the web server for a blockchain visualization tool.

A summary area 402 displays summary information for the blockchain network, including a block total 404, a transaction total 406, a contract total 408, and a node count 410. Contracts, which may be referred to as smart contracts, are executable programs that are stored in the blockchain and executed by nodes of the blockchain network. Execution of contracts can result in blockchain network transactions.

A node status area 412 displays summary information for blockchain network nodes, including node identifiers, node address information, and node status information. A node status graphic 414 indicates a ratio of participating nodes, with a shaded portion 416 representing non-participating nodes and the remainder of the node status graphic 414 representing participating nodes. Participating nodes participate in consensus building for the blockchain network.

A transaction history area 420 displays recent transaction history information for the blockchain network. A transaction volume per day is plotted in a transaction volume graph 422. As indicated by a note 424, 170 transactions occurred in the blockchain network on 10-09-2018.

A blocks area 430 displays information about blocks included in the consensus version of the blockchain. A chain graph structure 431 includes block representations 432, 434, 436, and 438 that represent a set of blocks that can be, for example, the latest blocks to be added to the consensus version of the blockchain. Each block representation 432, 434, 436, or 438 can display a block height value and a block generation time. The block height for a block can indicate a number of blocks that precede the block in the blockchain.

Additional information can be displayed next to each block representation 432, 434, 436, or 438. For instance, for the block corresponding to the block representation 432, a block hash 440, block transaction information 442, and block gas consumption information 444 are displayed. The block hash 440 is a hash value of the contents of the block corresponding to the block representation 432. The block transaction information 442 indicates that the block corresponding to the block representation 432 accumulated five transactions in five seconds before being added to the blockchain. The block gas consumption information 444 represents a computation effort required to execute contracts associated with the block corresponding to the block representation 432.

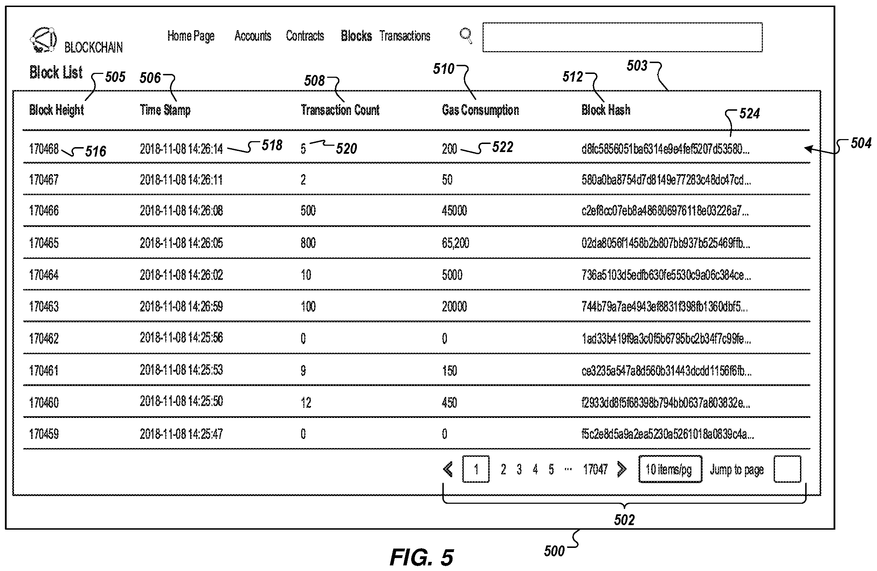

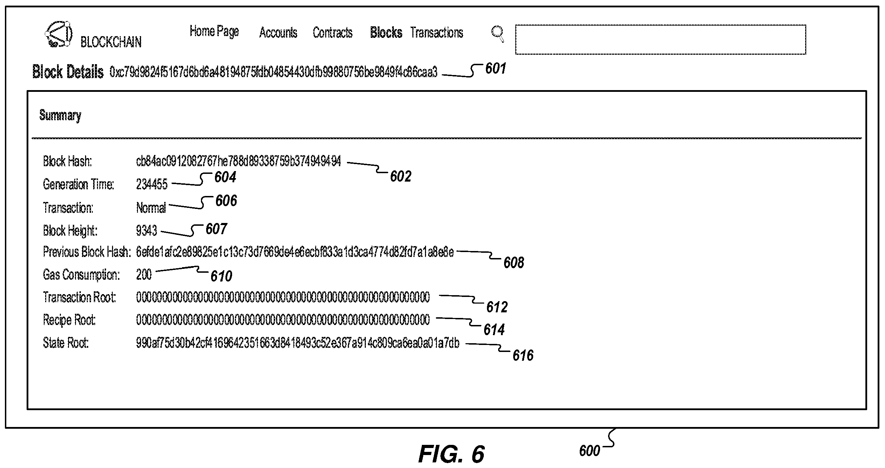

A user can select a particular block representation 432, 434, 436, or 438 to request a block details user interface (discussed below with respect to FIG. 6) that displays detailed information for a particular block. The number of block representations displayed in the blocks area 430 can be based on a screen size of a client device. In some implementations, the user can scroll within the blocks area 430 to view other blocks in the blockchain. A view-all blocks link 446 can be selected to request a block list user interface (discussed below with respect to FIG. 5) in which the user can view a list of blocks and navigate to particular blocks of the blockchain.

A user can select a link (e.g., a link 448) between block representations to reposition the block graph structure 431 within the blocks area 430. For example, if the user selects the link 448, the block representation 436 can be positioned at the top of the chain graph structure 431, the block representations 432 and 434 can be removed from (e.g., no longer displayed in) the blocks area 430, and two other block representations representing two blocks that follow the block representation 438 can be displayed in the chain graph structure, below and connected to the block representation 438.

A transactions area 450 includes transaction information for a set of transactions. The set of transactions can be, for example, a most recent set of transactions that have occurred for the blockchain. As another example, in some implementations, a user can select a particular block representation 432, 434, 436, or 438 (or a transaction information item for a particular block, such as the transaction information 442) to view transactions for a corresponding block in the transactions area 450.

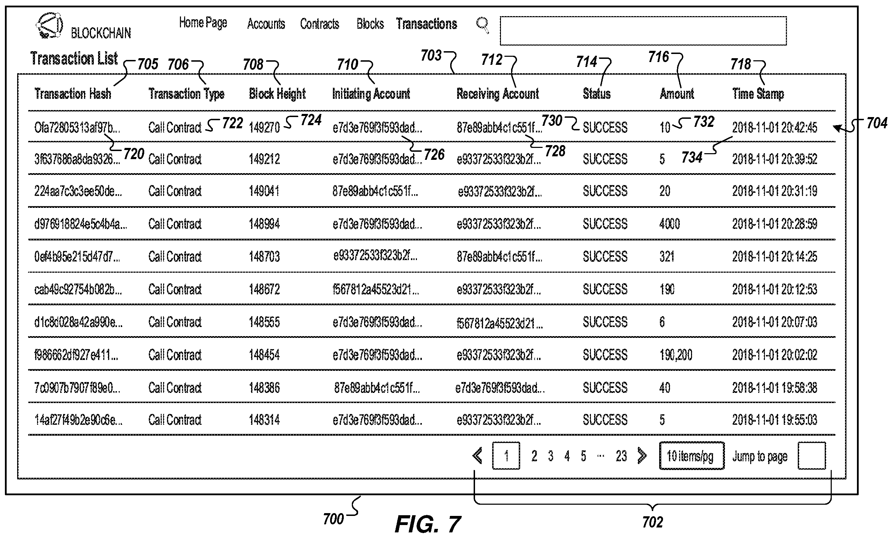

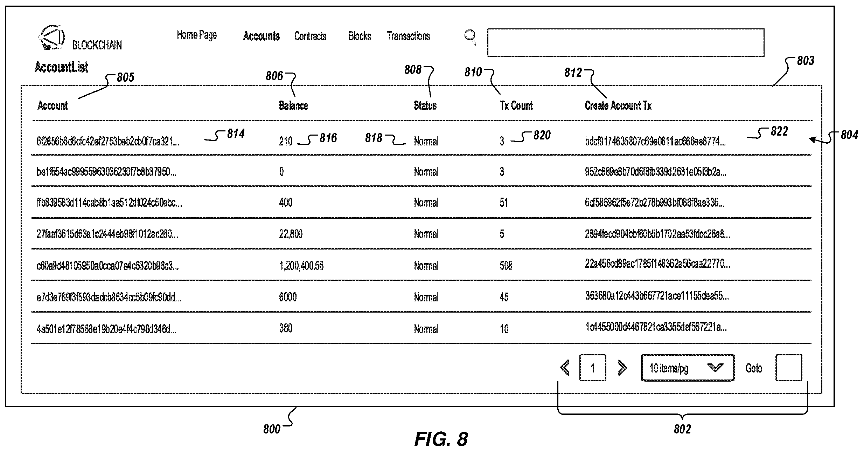

Various transaction details can be displayed for each transaction in the transactions area 450. For instance, for a transaction 452, a transaction identifier 454, a sending account identifier 456, a receiving account identifier 458, and a transaction time stamp 460 are displayed. A particular transaction can be selected to request a transaction details user interface (discussed below with respect to FIG. 8) that displays detailed transaction information for a particular transaction. A view-all transactions link 462 can be selected to request a transaction list user interface (discussed below with respect to FIG. 7) in which the user can view a list of transactions.

The home page user interface 400 can be configured to refresh to show information for an updated consensus version of the blockchain. For instance, the nodes of the blockchain network may have agreed upon an updated consensus version of the blockchain since the home page user interface 400 was last refreshed. The home page user interface 400 can be configured to send a request to the web server periodically (e.g., every minute), to request an updated user interface. The web server can determine whether an updated consensus version of the blockchain is available, and if so, send an updated user interface 400 to the client device. As another example, different areas or components of the home page user interface 400 can be configured to receive information updates (with new information from the web server) and update a respective area or component to show the updated information. The web server can be configured to push new information to the home page user interface 400 (or to particular areas or components) in response to determining that a new consensus version of the blockchain is available.

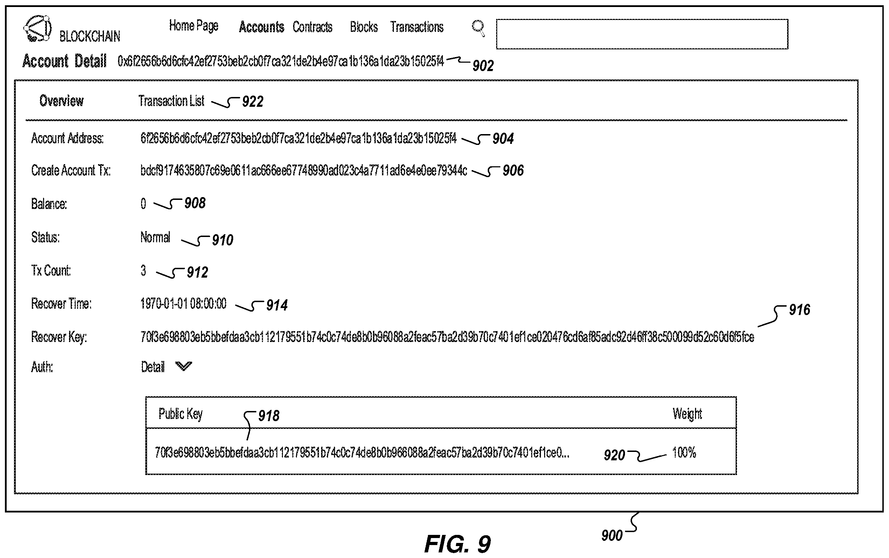

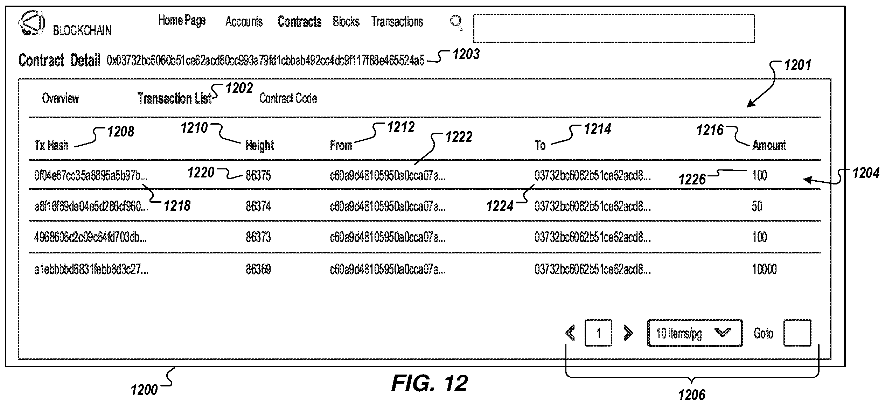

The home page user interface 400 includes a page header 470. The page header 470 includes an accounts link 472, a contracts link 474, a blocks link 476, and a transactions link 478, that enable a user to navigate to an accounts list user interface (discussed below with respect to FIG. 9), a contract list user interface (discussed below with respect to FIG. 12), the block list user interface, or the transactions list user interface, respectively. The page header 470 can be displayed on each subsequently-displayed user interface. When on a user interface other than the home page user interface 400, a home page link 480 displayed in a respective page header can be selected to return to the home page user interface 400.

The page header 470 includes a search box 482 that enables a user to search for information associated with the blockchain network. For example, the search box 482 can enable the user to enter a block height or block hash value to search for a particular block. A search results page can be shown that enables a user to select a particular block search result, to view block details (e.g., in a block details user interface). Other search examples include a user searching for a transaction using a transaction identifier or transaction hash value, searching for an account using an account identifier or account hash value, or searching for a contract using a contract identifier or a contract hash value. The user can click on a respective search result to view a particular transaction, account, or contract in a respective transaction detail, account detail, or contract detail user interface.

In some implementations, the home page user interface 400 includes one or more filter options. For example, the user can select a filter control 490 to view available filters for the blocks area 430. The filter control 490 can enable the blocks area 430 to be filtered to show blocks generated in a certain time range, non-empty blocks (e.g., filtering out empty blocks), etc. As another example, the user can select a filter control 492 to view available filters for the transactions area 450. The filter control 490 can enable the transactions area 450 to be filtered to show transactions generated in a certain time range, transactions associated with a particular account, or transactions matching other criteria.

FIG. 5 depicts an example block list user interface 500 in accordance with implementations of this specification. The block list user interface 500 can be generated by the web server, provided to a requesting client device, and displayed on the client device in response to selection of the view-all blocks link 446 in the blocks area 430 of the home page user interface 400, or in response to selection of the blocks link 476 in the page header 470 of the home page user interface 400 or a blocks link presented in another user interface.

Block information for blocks of the blockchain network 102 can be displayed in the block list user interface 500 in pages. A predefined number of blocks (e.g., ten) can be displayed in each page. A page navigation area 502 can enable a user to navigate to a particular page or to configure how many blocks are displayed in each page. By default, a most recent set of blocks can be initially displayed on a first page. Block information for blocks in a currently-displayed page can be displayed in a block list 503. Each row in the block list 503 corresponds to a particular block. For example, the block list 503 includes a row 504.

For each block in a currently-displayed page, the following information can be displayed in the block list 503, in a respective row: a block height 505, a block generation time 506, a transaction count 508, a gas consumption amount 510, and a block hash 512.

The block height 505 for a block indicates the number of blocks that precede the block in the blockchain. The block height 505 can be used to identify a given block. For example, the row 504 includes a block height 516 of 170468.

The block generation time 506 for a block indicates a time at which the block was added to the blockchain network by a node. For example, a block generation time 518 indicates that the block associated with the row 504 was generated at 14:26:14 on 11-08-2018.

The transaction count 508 for a block indicates how many transactions are included in the block. For example, a transaction count 520 indicates that the block associated with the row 504 includes five transactions.

The gas consumption amount 510 for a block indicates an amount of computation effort required to execute contracts associated with the block. For example, the row 504 includes a gas consumption value 522 of 200. If a block has no contracts, a gas consumption amount can be zero.

The block hash 512 for a block is a hash value of the contents of the block. For example, row 504 includes a block hash value 524 that begins with "d8fc5856051ba6314e9e4fef5207d53580."

A user can select a particular block to view a block details user interface for the selected block. For example, to select a block, the user can select a block height value such as the block height 516 or a block hash value such as the block hash value 524. As another example, in some implementations, each row of the block list 503 (including the row 504) is a selectable unit, and a block details user interface for a block associated with a selected row can be displayed in response to selection of the selected row. A given row can be selected for example, by clicking or tapping within the row.

FIG. 6 depicts an example block details user interface 600 in accordance with implementations of this specification. The block details user interface 600 can be generated by the web server, provided to a requesting client device, and displayed on the client device in response to selection of a block on the block list user interface 500 or the home page user interface 400, or a selection of a block or block-identifying information on another user interface.

The following information can be displayed for the selected block: a block identifier 601, a block hash 602, a block generation time 604, a transaction status 606, a block height 607, a previous block hash 608, a block gas consumption amount 610, a transaction root 612, a receipts root 614, and a status root 616.

As described above, the block hash 602 is a hash value of the contents of the block, the block generation time 604 indicates a time at which the block was added to the blockchain network by a node, the block height 607 indicates the number of blocks that precede the block in the blockchain, and the block gas consumption amount 610 indicates an amount of computation effort required to execute contracts associated with the block.

The transaction status 606 displays a status of a transaction that resulted in generation of the block. The previous block hash 608 is a hash value of a block that precedes the block in the blockchain. In some implementations, selection of the previous block hash 608 can result in a request being sent to the web server for an updated block details user interface 600 that shows details for the block having the previous block hash 608.

The transaction root 612 is a hash of a root node of a transactions tree that includes the transactions listed in the block. The receipts root 614 is a hash value of a root of a receipt tree for the block. The receipt tree includes receipts of the transactions executed in the block. A transaction receipt for a transaction includes information that results from executing the transaction. Transaction receipts are generated after a transaction is processed and include post-transaction information. The state root 616 is a hash value of a root of a state tree for the block. The state tree includes information about a state of each executed transaction associated with the block. The state tree can be generated after all of the block's transactions have been executed and finalized.

FIG. 7 depicts an example transaction list user interface 700 in accordance with implementations of this specification. The transaction list user interface 700 can be generated by the web server, provided to a requesting client device, and displayed on the client device in response to selection of the view-all link 462 in the transactions area 450 of the home page user interface 400, or in response to selection of the transactions link 478 in the page header 470 of the home page user interface 400 or a transactions link presented in another user interface.

Transaction information can be displayed in the transaction list user interface 700 in pages. A predefined number of transactions (e.g., ten) can be displayed in each page. A page navigation area 702 can enable a user to navigate to a particular page or to configure how many transactions are displayed in each page. By default, a most recent set of transactions can be initially displayed on a first page. Transaction information for transactions in a currently-displayed page can be displayed in a transaction list 703. Each row in the transaction list 703 corresponds to a particular transaction. For example, the transaction list 703 includes a row 704.

For each transaction in a currently-displayed page, the following information can be displayed in the transaction list 703, in a respective row: a transaction hash 705, a transaction type 706, a block height 708, an initiating account number 710, a receiving account number 712, a transactions status 714, a transaction amount 716, and a transaction time stamp 718.

The transaction hash 705 for a transaction is a unique identifier for the transaction. For example, the row 704 includes a transaction hash value 720 that starts with "0fa72825313af97b."

The transaction type 706 for a transaction indicates a type of the transaction. For example, the transaction associated with the row 704 has a transaction type 722 of "Call Contract," indicating that the transaction associated with the row 704 was initiated by execution of a contract. Transaction types can be from a predefined set of transaction types. Other transaction types can include "transaction," which indicates that a transaction was initiated by an account associated with a blockchain network node (and not initiated as a result of a contract execution).

The block height 708 for a transaction is a block height of the block that includes the transaction. For example, the transaction associated with the row 704 has a block height 724 of 149270.

The initiating account number 710 for a transaction is an account number of an account that initiated the transaction. For example, the transaction associated with the row 704 has an initiating account number 726 that starts with "e7d3e769f3f593dad."

The receiving account number 712 for a transaction is an account number of an account that is a recipient of the transaction. For example, the transaction associated with the row 704 has a receiving account number 728 that starts with "87e89abb4clc551f."

The transaction status 714 for a transaction indicates a status value for the transaction. For example, the transaction associated with the row 704 has a transaction status value 730 of "success". Transaction status values can be from a predefined set of transaction status values. Other transaction status values can include values that indicate that a transaction is pending, was unsuccessful, or is in some other state.

A transaction amount for a transaction is an amount associated with the transaction. For example, the transaction associated with the row 704 has a transaction amount 732 of 10.

A transaction time stamp for a transaction indicates a time at which a transaction was generated. For example, the transaction associated with the row 704 has a transaction time stamp 734 that indicates that the transaction occurred at 20:42:45 on 11-07-2018. Although not shown, in some implementations, a transaction details user interface can be displayed, in response to selection of a transaction identifier, that displays values for a particular transaction

FIG. 8 depicts an example account list user interface 800 in accordance with implementations of this specification. The account list user interface 800 can be generated by the web server, provided to a requesting client device, and displayed on the client device in response to selection of the accounts link 472 in the page header 470 of the home page user interface 400 or an accounts link presented in another user interface.

Account information can be displayed in the account list user interface 800 in pages. A predefined number of accounts (e.g., ten) can be displayed in each page. A page navigation area 802 can enable a user to navigate to a particular page or to configure how many accounts are displayed in each page. By default, a set of most recently created accounts can be initially displayed on a first page. As another example, accounts can be sorted by account number and an initially-displayed set of accounts can be a set of accounts having account numbers with lowest (or highest) account number values. Account information for accounts in a currently-displayed page can be displayed in an account list 803. Each row in the account list 803 corresponds to a particular account. For example, the account list 803 includes a row 804.

For each account in a currently-displayed page, the following information can be displayed in the account list 803, in a respective row: an account number 805, an account balance 806, an account status 808, a transaction count 810, and an account-creation transaction hash 812.

The account number 805 for an account can be a public key associated with the account. For example, the account associated with the row 804 has an account number 814 that starts with "6f2656b6d6cfc42ef2753beb2cb0f7ca321."

The account balance 806 for an account is an account balance value for the account in the blockchain network. For example, the account associated with the row 804 has an account balance value 816 of 210.

The account status 808 for an account is a status associated with the account. For example, the account associated with the row 804 has an account status 818 of "Normal."

The transaction count 810 for an account indicates how many transactions the account has participated in since the creation of the account. For example, the account associated with the row 804 has a transaction count 820 of three.

The account-creation transaction hash 812 for an account is an identifier of a transaction that was executed to create the account. For example, the account associated with the row 804 has an account-creation transaction hash value 822 that starts with "bdcf9174635807c69e0611ac666ee6774." A transaction details user interface (e.g., the transaction details user interface 800) can be displayed in response to selection of an account-creation transaction hash value such as the account-creation transaction hash value 822.

A user can select a particular account to view an account details user interface for the selected account. For example, to select an account, the user can select an account number such as the account number 814. As another example, in some implementations, each row of the account list 803 (including the row 804) is a selectable unit, and an account details user interface for an account associated with a selected row can be displayed in response to selection of the selected row. A given row can be selected for example, by clicking or tapping within the row.

FIG. 9 depicts an example account details user interface 900 in accordance with implementations of this specification. The account details user interface 900 can be generated by the web server, provided to a requesting client device, and displayed on the client device in response to selection of an account on the account list user interface 900, or a selection of an account or account-identifying information on another user interface. Account address values 902 and 904 indicate which account was selected before the account detail user interface 900 was displayed. The account address values 902 and 904 can be a public key associated with the selected account.

An account-creation transaction hash 906 is an identifier of a transaction that was executed to create the selected account. An account balance 908 indicates an account balance value for the selected account in the blockchain network. An account status 910 is a status associated with the selected account. A transaction count 912 indicates how many transactions the selected account has participated in since the creation of the selected account.

Recover time 914 indicates a time at which the selected account was recovered. Recover key 916 is a cryptographic key that was used for recovery of the selected account. Public key 918 is a public cryptographic key associated with the account and used to identify the account in the blockchain network. Weight 920 is a weight (e.g., a Hamming weight) associated with the public key 918. A transaction list link 922 can be selected to view transactions associated with the account.

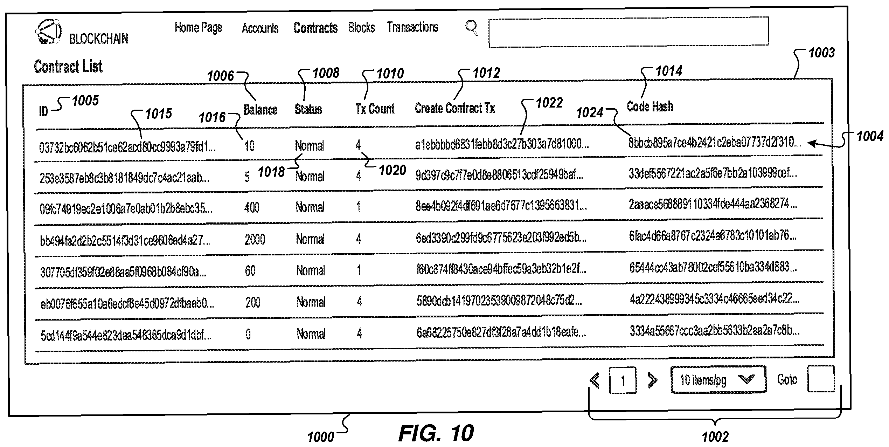

FIG. 10 depicts an example contract list user interface 1000 in accordance with implementations of this specification. The contract list user interface 1000 can be generated by the web server, provided to a requesting client device, and displayed on the client device in response to selection of the contracts link 475 in the page header 470 of the home page user interface 400 or a contracts link presented in another user interface.

Contract information can be displayed in the contract list user interface 1000 in pages. A predefined number of contracts (e.g., ten) can be displayed in each page. A page navigation area 1002 can enable a user to navigate to a particular page or to configure how many contracts are displayed in each page. By default, a set of most recently created (or executed) contracts can be initially displayed on a first page. As another example, contracts can be sorted by contract identifier and an initially-displayed set of contracts can be contracts having a set of contract identifiers with lowest (or highest) contract identifier values. Contract information for contracts in a currently-displayed page can be displayed in a contract list 1003. Each row in the contract list 1003 corresponds to a particular contract. For example, the contract list 1003 includes a row 1004.

For each contract in a currently-displayed page, the following information can be displayed in the contract list 1003, in a respective row: a contract identifier 1005, a balance 1006, a contract status 1008, a transaction count 1010, a contract-creation transaction hash 1012, and a code hash 1014.

The contract identifier 1005 for a contract can be a unique identifier for the contract. For example, the contract associated with the row 1004 has a contract identifier 1015 that starts with "03732bc6062b51ce62acd80cc993a79fdl." The contract identifier 1005 for a contract can be a hash value of contract information associated with the contract.

The balance 1006 for a contract is a balance value for the contract in the blockchain network. For example, the contract associated with the row 1004 has a balance value 1016 of 10.

The contract status 1008 for a contract is a status associated with the contract. For example, the contract associated with the row 1004 has a contract status 1018 of "Normal." The contract status 1008 for a contract can reflect a result of a last execution of the contract. The contract status 1018 can be a predefined value among other predefined contract status values.

The transaction count 1010 for a contract indicates how many transactions have been created as a result of executing the contract. For example, the contract associated with the row 1004 has a transaction count 1020 of four.

The contract-creation transaction hash 1012 for an account is an identifier of a transaction that was executed to create the contract. For example, the contract associated with the row 1004 has a contract-creation transaction hash value 1022 that starts with "alebbbd6831febb8d3c27b303a7d81200." A transaction details user interface (e.g., the transaction details user interface 800) can be displayed in response to selection of a contract-creation transaction hash value such as the contract-creation transaction hash value 1022.

A user can select a particular contract to view a contract details user interface for the selected contract. For example, to select a contract, the user can select a contract identifier such as the contract identifier 1015. As another example, in some implementations, each row of the contract list 1003 (including the row 1004) is a selectable unit, and a contract details user interface for a contract associated with a selected row can be displayed in response to selection of the selected row. A given row can be selected for example, by clicking or tapping within the row.

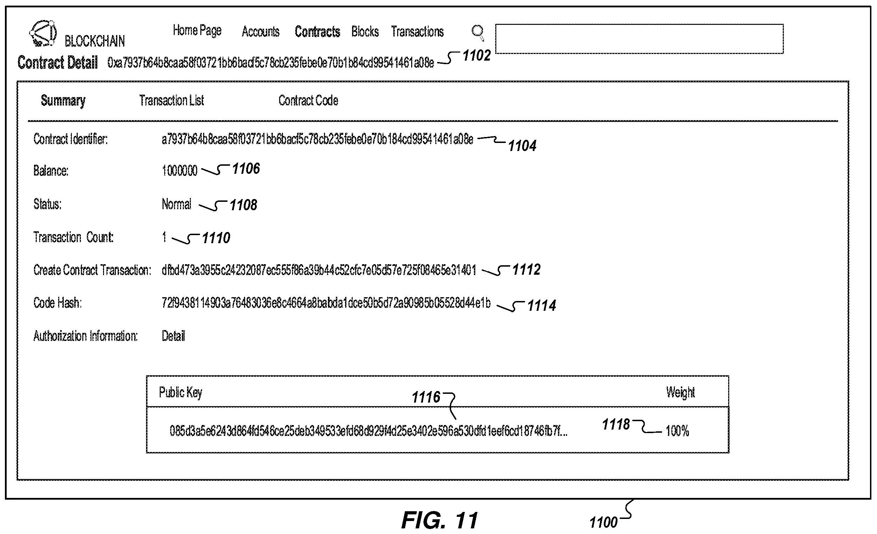

FIG. 11 depicts an example contract details user interface 1100 in accordance with implementations of this specification. The contract details user interface 1100 can be generated by the web server, provided to a requesting client device, and displayed on the client device in response to selection of a contract on the contract list user interface 1200, or a selection of a contract or contract-identifying information on another user interface. Contract identifier values 1102 and 1104 indicate which contract was selected before the contract detail user interface 1100 was displayed. The contract identifier values 1102 and 1104 can each uniquely identify the selected contract.

A contract balance 1106 indicates a contract balance value for the selected contract in the blockchain network. A contract status 1108 is a status associated with the selected contract. A transaction count 1110 indicates how many transactions have been created as a result of executing the selected contract. A contract-creation transaction hash 1112 is an identifier of a transaction that was executed to create the presented contract. A code hash value 1114 is a hash value of code associated with the presented contract.

A public key 1116 is a public key used for authorization. A weight 1118 is a weight (e.g., a Hamming weight) associated with the public key 1116.

FIG. 12 depicts an example contract details user interface 1200 for contract transactions in accordance with implementations of this specification. A transactions list 1201 can be generated by the web server, provided to a requesting client device, and displayed on the client device in response to selection of a transaction list link 1202. The transactions list 1201 displays transaction information for transactions that have been created as a result of executing a selected contract having a contract identifier 1203. Each row in the transaction list 1201 corresponds to a particular transaction. For example, the transaction list 1203 includes a row 1204.

Transaction information can be displayed in the transaction list 1201 in pages. A predefined number of transactions (e.g., ten) can be displayed in each page. A page navigation area 1206 can enable a user to navigate to a particular page or to configure how many transactions are displayed in each page. By default, a most recent set of transactions generated from execution of the contract can be initially displayed on a first page.

For each transaction in a currently-displayed page, the following information can be displayed in the transaction list 1201, in a respective row: a transaction hash 1208, a block height 1210, an initiating account number 1212, a receiving account number 1214, and a transaction amount 1216.

The transaction hash 1208 for a transaction is a unique identifier for the transaction. For example, the row 1204 includes a transaction hash value 1218 that starts with "0f04e67cc26a8895a5b97b."

The block height 1210 for a transaction is a block height of the block that includes the transaction. For example, the transaction associated with the row 1204 has a block height 1220 of 86375.

The initiating account number 1212 for a transaction is an account number of an account that initiated the transaction. For example, the transaction associated with the row 1204 has an initiating account number 1222 that starts with "c60a9d48105950a0cca07a."

The receiving account number 1214 for a transaction is an account number of an account that is a recipient of the transaction. For example, the transaction associated with the row 1204 has a receiving account number 1224 that starts with "03732bc6062b51ce62acd8."

A transaction amount for a transaction is an amount associated with the transaction. For example, the transaction associated with the row 1204 has a transaction amount 1226 of 100.

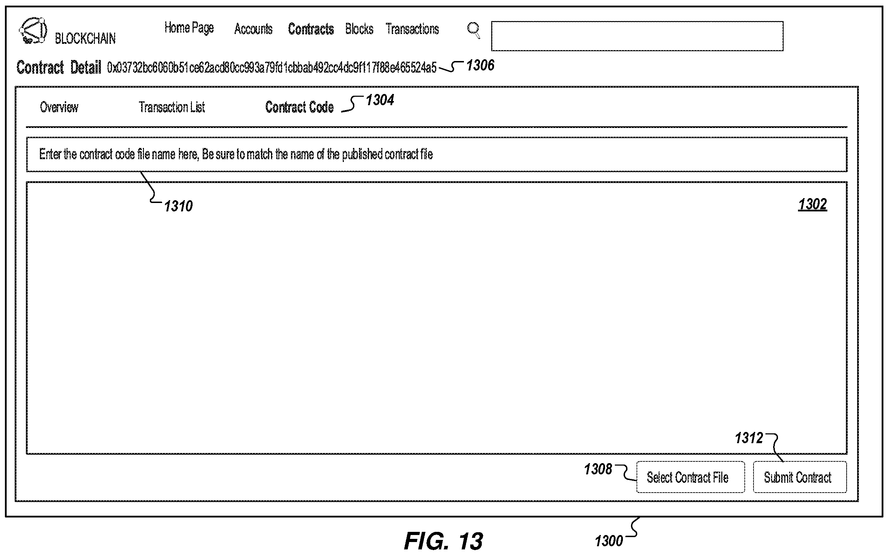

FIG. 13 depicts an example contract details user interface 1300 for contract code in accordance with implementations of this specification. A contract code area 1302 can be displayed in response to selection of a contract code link 1304. The contract code area 1302 can show contract code (e.g., bytecode) for a contract with a contract identifier 1306. A user can select a user interface control 1308 to select a contract code file that includes the contract code. As another example, the user can enter a reference to a contract code file in an entry area 1310. The user can select a submit user interface control 1312 to submit the contract code file that was selected using the user interface control 1308 or that is specified in the entry area 1310.

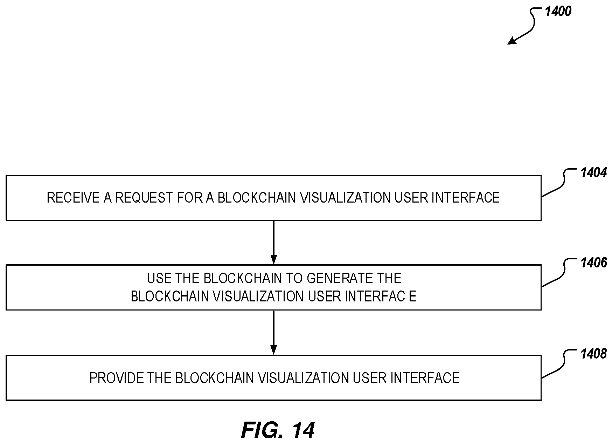

FIG. 14 depicts an example process 1400 that can be executed in accordance with implementations of this specification. For clarity of presentation, the description that follows generally describes the example process 1400 in the context of the other figures in this description. However, it will be understood that the example process 1400 can be performed, for example, by any system, environment, software, and hardware, or a combination of systems, environments, software, and hardware, as appropriate. In some implementations, various steps of the example process 1400 can be run in parallel, in combination, in loops, or in any order.

At 1404, a request for a blockchain visualization user interface is received from a client device. For example, the blockchain visualization user interface can be associated with a resource identifier (e.g., URL (Uniform Resource Locator)) and a user of the client device can enter the resource identifier into a browser running on the client device. The request for the blockchain visualization user interface can be received at the web server.

At 1406, the blockchain is used to generate the blockchain visualization user interface. The user interface can include a chain graph structure that visually depicts at least a portion of the blockchain and transaction information for transactions that have occurred in the blockchain network. The transaction information can include information for most-recent transactions associated with the blockchain. The generated blockchain visualization user interface can be, for example, a web page. The chain graph structure can include a chain of selectable block representations that each represent a block in the blockchain. The selectable block representations can be connected with selectable links and the blockchain visualization user interface can be configured to reposition the chain graph structure in response to a user selection of a particular selectable link so that a selectable block representation that is the target of the selected link is positioned at the top of the chain graph structure.

At 1408, the blockchain visualization user interface is provided to the client device in response to the request for the blockchain visualization user interface. The client device can present the blockchain visualization user interface, for example, in a browser. After the blockchain visualization user interface has been presented on the client device, the web server can identify or determine an updated blockchain. An updated blockchain visualization user interface can be generated using the updated blockchain. The updated blockchain visualization user interface can be provided to the client device, for presentation on the client device.

In some cases, the blockchain can be a consensus version of the blockchain. In some implementations, prior to receiving the request for the blockchain visualization user interface, the consensus version of the blockchain can be determined based on interacting with nodes of a blockchain network associated with the blockchain (as previously described above).

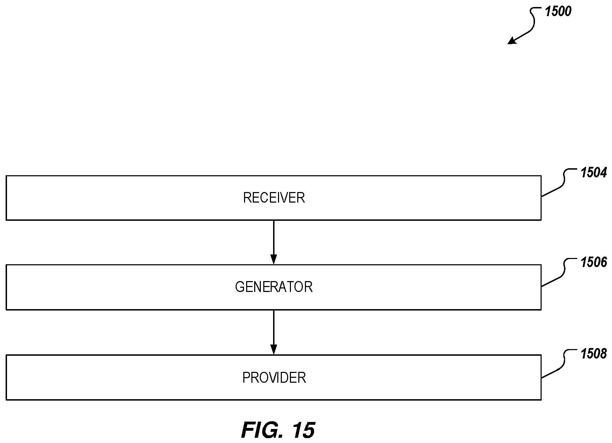

FIG. 15 depicts examples of modules of an apparatus 1500 in accordance with implementations of this specification. The apparatus 1500 can be an example implementation of a server configured to provide a visualization of a blockchain associated with a blockchain network, such as a consortium blockchain network. The apparatus 1500 can correspond to the implementations described above, and the apparatus 1500 includes the following: a receiver or receiving unit 1502 for receiving, from a client device, a request for a blockchain visualization user interface; an generator or generating unit 1504 for generating the blockchain visualization user interface based on the blockchain, the blockchain visualization user interface including a chain graph structure that visually depicts at least a portion of the blockchain and transaction information for transactions that have occurred in the blockchain network; and a provider or providing unit 1506 for providing the blockchain visualization user interface for display on the client device in response to the request for the blockchain visualization user interface.

The system, apparatus, module, or unit illustrated in the previous implementations can be implemented by using a computer chip or an entity, or can be implemented by using a product having a certain function. A typical implementation device is a computer, and the computer can be a personal computer, a laptop computer, a cellular phone, a camera phone, a smartphone, a personal digital assistant, a media player, a navigation device, an email receiving and sending device, a game console, a tablet computer, a wearable device, or any combination of these devices.

For an implementation process of functions and roles of each unit in the apparatus, references can be made to an implementation process of corresponding steps in the previous method. Details are omitted here for simplicity.

Because an apparatus implementation basically corresponds to a method implementation, for related parts, references can be made to related descriptions in the method implementation. The previously described apparatus implementation is merely an example. The units described as separate parts may or may not be physically separate, and parts displayed as units may or may not be physical units, may be located in one position, or may be distributed on a number of network units. Some or all of the modules can be selected based on actual demands to achieve the objectives of the solutions of the specification. A person of ordinary skill in the art can understand and implement the implementations of the present application without creative efforts.

Referring again to FIG. 15, it can be interpreted as illustrating an internal functional module and a structure of a server configured to provide a visualization of a blockchain associated with a blockchain network.

The techniques described in this specification enable a computer to provide an interactive visual representation of a blockchain. The techniques enable the computer to provide different views of the data in the blockchain in response to client requests. Accordingly, the techniques enable the computer to provide an interactive and comprehensive visual representation of the blockchain to users, thereby simplifying the task of analyzing the data in the blockchain. In addition, the techniques can enable the computer to provide the visual representation of the blockchain based on the current representation of the blockchain (i.e., a consensus version) in an associated blockchain network. Basing the visual representation on the most current representation of the blockchain as deduced from interactions with nodes of the blockchain network enables the computer to provide a visual representation of the blockchain that is current and accurate as of the time a request for the visual representation is received.

Implementations of the subject matter and the actions and operations described in this specification can be implemented in digital electronic circuitry, in tangibly-embodied computer software or firmware, in computer hardware, including the structures disclosed in this specification and their structural equivalents, or in combinations of one or more of them. Implementations of the subject matter described in this specification can be implemented as one or more computer programs, e.g., one or more modules of computer program instructions, encoded on a computer program carrier, for execution by, or to control the operation of, data processing apparatus. The carrier may be a tangible non-transitory computer storage medium. Alternatively, or in addition, the carrier may be an artificially-generated propagated signal, e.g., a machine-generated electrical, optical, or electromagnetic signal that is generated to encode information for transmission to suitable receiver apparatus for execution by a data processing apparatus. The computer storage medium can be or be part of a machine-readable storage device, a machine-readable storage substrate, a random or serial access memory device, or a combination of one or more of them. A computer storage medium is not a propagated signal.

The term "data processing apparatus" encompasses all kinds of apparatus, devices, and machines for processing data, including by way of example a programmable processor, a computer, or multiple processors or computers. Data processing apparatus can include special-purpose logic circuitry, e.g., an FPGA (field programmable gate array), an ASIC (application-specific integrated circuit), or a GPU (graphics processing unit). The apparatus can also include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, an engine, a script, or code, can be written in any form of programming language, including compiled or interpreted languages, or declarative or procedural languages; and it can be deployed in any form, including as a stand-alone program or as a module, component, engine, subroutine, or other unit suitable for executing in a computing environment, which environment may include one or more computers interconnected by a data communication network in one or more locations.

A computer program may, but need not, correspond to a file in a file system. A computer program can be stored in a portion of a file that holds other programs or data, e.g., one or more scripts stored in a markup language document, in a single file dedicated to the program in question, or in multiple coordinated files, e.g., files that store one or more modules, sub-programs, or portions of code.

The processes and logic flows described in this specification can be performed by one or more computers executing one or more computer programs to perform operations by operating on input data and generating output. The processes and logic flows can also be performed by special-purpose logic circuitry, e.g., an FPGA, an ASIC, or a GPU, or by a combination of special-purpose logic circuitry and one or more programmed computers.

Computers suitable for the execution of a computer program can be based on general or special-purpose microprocessors or both, or any other kind of central processing unit. Generally, a central processing unit will receive instructions and data from a read-only memory or a random access memory or both. Elements of a computer can include a central processing unit for executing instructions and one or more memory devices for storing instructions and data. The central processing unit and the memory can be supplemented by, or incorporated in, special-purpose logic circuitry.

Generally, a computer will be coupled to at least one non-transitory computer-readable storage medium (also referred to as a computer-readable memory). The storage medium coupled to the computer can be an internal component of the computer (e.g., an integrated hard drive) or an external component (e.g., universal serial bus (USB) hard drive or a storage system accessed over a network). Examples of storage media can include, for example, magnetic, magneto-optical, or optical disks, solid state drives, network storage resources such as cloud storage systems, or other types of storage media. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

To provide for interaction with a user, implementations of the subject matter described in this specification can be implemented on, or configured to communicate with, a computer having a display device, e.g., a LCD (liquid crystal display) monitor, for displaying information to the user, and an input device by which the user can provide input to the computer, e.g., a keyboard and a pointing device, e.g., a mouse, a trackball or touchpad. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser, or by interacting with an app running on a user device, e.g., a smartphone or electronic tablet. Also, a computer can interact with a user by sending text messages or other forms of message to a personal device, e.g., a smartphone that is running a messaging application, and receiving responsive messages from the user in return.

This specification uses the term "configured to" in connection with systems, apparatus, and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions. For special-purpose logic circuitry to be configured to perform particular operations or actions means that the circuitry has electronic logic that performs the operations or actions.

While this specification contains many specific implementation details, these should not be construed as limitations on the scope of what is being claimed, which is defined by the claims themselves, but rather as descriptions of features that may be specific to particular implementations. Certain features that are described in this specification in the context of separate implementations can also be realized in combination in a single implementation. Conversely, various features that are described in the context of a single implementations can also be realized in multiple implementations separately or in any suitable subcombination. Moreover, although features may be described above as acting in certain combinations and even initially be claimed as such, one or more features from a claimed combination can in some cases be excised from the combination, and the claim may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the implementations described above should not be understood as requiring such separation in all implementations, and it should be understood that the described program components and systems can generally be integrated together in a single software product or packaged into multiple software products.

Particular implementations of the subject matter have been described. The actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer-implemented method (1400) for providing a visualization of a blockchain (102, 302) associated with a blockchain network, the method comprising:
prior to receiving a request for a blockchain visualization user interface from a client device, determining a consensus version of the blockchain based on interacting with nodes of the blockchain network;
receiving (1404), from the client device, the request for the blockchain visualization user interface;
generating (1406) the blockchain visualization user interface (314) based on the consensus version of the blockchain as deduced from interactions with nodes of the blockchain network, the blockchain visualization user interface including a chain graph structure (431) that visually depicts at least a portion of the blockchain and transaction information for transactions that have occurred in the blockchain network, wherein the chain graph structure (431) comprises a chain of selectable block representations that each represent a block in the blockchain;
providing (1408) the blockchain visualization user interface for display on the client device in response to the request for the blockchain visualization user interface;
determining an updated consensus version of the blockchain;
generating an updated blockchain visualization user interface based on the updated consensus version of the blockchain; and
providing the updated blockchain visualization user interface to the client device.

2. The method (1400) of claim 1, wherein the consensus version of the blockchain is selected from among multiple candidate paths using a longest-chain and/or a heaviest-chain criteria.

3. The method (1400) of claim 1, further comprising:
receiving a request for a block details user interface in response to a user selection of a particular block representation that corresponds to a particular block in the blockchain;
retrieving block information for the particular block from the blockchain;
generating the block details user interface based on the retrieved block information; and
providing the block details user interface in response to the request for the block details user interface.

4. The method (1400) of claim 1, wherein the selectable block representations are connected with selectable links and the blockchain visualization user interface is configured to reposition the chain graph structure in response to a user selection of a particular selectable link so that a selectable block representation that is the target of the selected link is positioned at the top of the chain graph structure.

5. The method (1400) of claim 1, wherein the transaction information comprises information for most-recent transactions associated with the blockchain.

6. The method (1400) of claim 1, wherein the transaction information comprises transaction identifying information for a first transaction, the method further comprising:
receiving a request for a transaction details user interface for the first transaction in response to a user selection of the transaction identifying information;
retrieving transaction information for the first transaction using the blockchain;
generating the transaction details user interface based on the transaction information for the first transaction; and
providing the transaction details user interface in response to the request for the transaction details user interface.

7. The method (1400) of claim 1, further comprising:
receiving, from the client device, a request for a block list user interface;
retrieving block information from the blockchain;
generating the block list user interface based on the retrieved block information; and
providing the block list user interface in response to the request for the block list user interface.

8. The method (1400) of claim 1, further comprising:
receiving, from the client device, a request for a transaction list user interface;
retrieving transaction information using the blockchain;
generating the transaction list user interface based on the retrieved transaction information; and
providing the transaction list user interface in response to the request for the transaction list user interface.

9. The method (1400) of claim 1, further comprising:
receiving, from the client device, a request for an account list user interface;
retrieving account information for nodes of the blockchain network using the blockchain;
generating the account list user interface based on the retrieved account information; and
providing the account list user interface in response to the request for the account list user interface.

10. The method (1400) of claim 1, further comprising:
receiving, from the client device, a request for a contract list user interface;
retrieving contract information using the blockchain;
generating the contract list user interface based on the retrieved contract information; and
providing the contract list user interface in response to the request for the contract list user interface.

11. A non-transitory computer-readable storage medium coupled to one or more computers and having stored therein instructions executable by the one or more computers to perform the method (1400) of any one of claims 1 to 10.

12. A system, comprising:
one or more computers; and one or more computer-readable memories coupled to the one or more computers and having stored therein instructions executable by the one or more computers to perform the method (1400) of any one of claims 1 to 10.

## Patentansprüche

1. Computerimplementiertes Verfahren (1400) zur Bereitstellung einer Visualisierung einer Blockchain (102, 302), die mit einem Blockchain-Netzwerk assoziiert ist, wobei das Verfahren umfasst:
Bestimmen einer Konsensversion der Blockchain basierend auf einer Interaktion mit Knoten im Blockchain-Netzwerk vor dem Empfangen einer Anforderung für eine Benutzeroberfläche zur Blockchain-Visualisierung von einer Clientvorrichtung;
Empfangen (1404) der Anforderung für die Benutzeroberfläche zur Blockchain-Visualisierung von der Clientvorrichtung;
Erzeugen (1406) der Benutzeroberfläche zur Blockchain-Visualisierung (314) basierend auf der Konsensversion der Blockchain, wie von Interaktionen mit Knoten des Blockchain-Netzwerks abgeleitet, wobei die Benutzeroberfläche zur Blockchain-Visualisierung eine Kettengraphstruktur (431) umfasst, die zumindest einen Teil der Blockchain und Transaktionsinformationen für Transaktionen visuell darstellt, die im Blockchain-Netzwerk stattgefunden haben, wobei die Kettengraphstruktur (431) eine Kette von auswählbaren Blockdarstellungen umfasst, die jeweils einen Block in der Blockchain darstellen;
Bereitstellen (1408) der Benutzeroberfläche zur Blockchain-Visualisierung zur Anzeige auf der Clientvorrichtung in Reaktion auf die Anforderung für die Benutzeroberfläche zur Blockchain-Visualisierung;
Bestimmen einer aktualisierten Konsensversion der Blockchain;
Erzeugen einer aktualisierten Benutzeroberfläche zur Blockchain-Visualisierung basierend auf der aktualisierten Konsensversion der Blockchain; und
Bereitstellen der aktualisierten Benutzeroberfläche zur Blockchain-Visualisierung für die Clientvorrichtung.

2. Verfahren (1400) nach Anspruch 1, wobei die Konsensversion der Blockchain aus mehreren Kandidatenpfaden unter Verwendung eines Kriteriums der längsten Kette und/oder der schwersten Kette ausgewählt wird.

3. Verfahren (1400) nach Anspruch 1, ferner umfassend:
Empfangen einer Anforderung für eine Benutzeroberfläche mit Blockdetails in Reaktion auf eine Benutzerauswahl einer spezifischen Blockdarstellung, die einem spezifischen Block in der Blockchain entspricht;
Abrufen von Blockinformationen für den spezifischen Block aus der Blockchain;
Erzeugen der Benutzeroberfläche mit Blockdetails basierend auf den abgerufenen Blockinformationen; und
Bereitstellen der Benutzeroberfläche mit Blockdetails in Reaktion auf die Anforderung für die Benutzeroberfläche mit Blockdetails.

4. Verfahren (1400) nach Anspruch 1, wobei die auswählbaren Blockdarstellungen mit auswählbaren Links verbunden sind, und die Benutzeroberfläche zur Blockchain-Visualisierung so konfiguriert ist, dass sie die Kettengraphstruktur in Reaktion auf eine Benutzerauswahl eines spezifischen auswählbaren Links neu positioniert, so dass eine auswählbare Blockdarstellung, die das Ziel des auswählbaren Links ist, am oberen Ende der Kettengraphstruktur positioniert wird.

5. Verfahren (1400) nach Anspruch 1, wobei die Transaktionsinformationen Informationen für die jüngsten Transaktionen umfassen, die mit der Blockchain assoziiert sind.

6. Verfahren (1400) nach Anspruch 1, wobei die Transaktionsinformationen Transaktionsidentifizierungsinformationen für eine erste Transaktion umfassen, wobei das Verfahren ferner umfasst:
Empfangen einer Anforderung für eine Benutzeroberfläche mit Transaktionsdetails für die erste Transaktion in Reaktion auf eine Benutzerauswahl der Transaktionsidentifizierungsinformationen;
Abrufen von Transaktionsinformationen für die erste Transaktion unter Verwendung der Blockchain;
Erzeugen der Benutzeroberfläche mit Transaktionsdetails basierend auf den Transaktionsinformationen für die erste Transaktion; und
Bereitstellen der Benutzeroberfläche mit Transaktionsdetails in Reaktion auf die Anforderung für die Benutzeroberfläche mit Transaktionsdetails.

7. Verfahren (1400) nach Anspruch 1, ferner umfassend:
Empfangen einer Anforderung für eine Benutzeroberfläche mit Blockliste von der Clientvorrichtung;
Abrufen von Blockinformationen von der Blockchain;
Erzeugen der Benutzeroberfläche mit Blockliste basierend auf den abgerufenen Blockinformationen; und
Bereitstellen der Benutzeroberfläche mit Blockliste in Reaktion auf die Anforderung für die Benutzeroberfläche mit Blockliste.

8. Verfahren (1400) nach Anspruch 1, ferner umfassend:
Empfangen einer Anforderung für eine Benutzeroberfläche mit Transaktionsliste von der Clientvorrichtung;
Abrufen von Transaktionsinformationen unter Verwendung der Blockchain;
Erzeugen der Benutzeroberfläche mit Transaktionsliste basierend auf den abgerufenen Transaktionsinformationen; und
Bereitstellen der Benutzeroberfläche mit Transaktionsliste in Reaktion auf die Anforderung für die Benutzeroberfläche mit Transaktionsliste.

9. Verfahren (1400) nach Anspruch 1, ferner umfassend:
Empfangen einer Anforderung für eine Benutzeroberfläche mit Kontenliste von der Clientvorrichtung;
Abrufen von Kontoinformationen für Knoten des Blockchain-Netzwerks unter Verwendung der Blockchain;
Erzeugen der Benutzeroberfläche mit Kontenliste basierend auf den abgerufenen Kontoinformationen; und
Bereitstellen der Benutzeroberfläche mit Kontenliste in Reaktion auf die Anforderung für die Benutzeroberfläche mit Kontenliste.

10. Verfahren (1400) nach Anspruch 1, ferner umfassend:
Empfangen einer Anforderung für eine Benutzeroberfläche mit Vertragsliste von der Clientvorrichtung;
Abrufen von Vertragsinformationen unter Verwendung der Blockchain;
Erzeugen der Benutzeroberfläche mit Vertragsliste basierend auf den abgerufenen Vertragsinformationen; und
Bereitstellen der Benutzeroberfläche mit Vertragsliste in Reaktion auf die Anforderung für die Benutzeroberfläche mit Vertragsliste.

11. Nicht-transitorisches computerlesbares Speichermedium, das mit einem oder mehreren Computern gekoppelt ist und Anweisungen darauf gespeichert aufweist, die von dem einen oder den mehreren Computern zum Durchführen des Verfahrens (1400) nach einem der Ansprüche 1 bis 10 ausgeführt werden können.

12. System, umfassend:
einen oder mehrere Computer; und
einen oder mehrere computerlesbare Speicher, die mit dem einen oder den mehreren Computern gekoppelt sind und Anweisungen darauf gespeichert aufweisen, die von dem einen oder den mehreren Computern zum Durchführen des Verfahrens (1400) nach einem der Ansprüche 1 bis 10 ausgeführt werden können.

## Revendications

1. Procédé (1400) mis en œuvre par ordinateur pour fournir une visualisation d'une chaîne (102, 302) de blocs associée à un réseau à chaînes de blocs, le procédé comportant les étapes consistant à :
avant de recevoir une demande portant sur une interface d'utilisateur de visualisation de chaîne de blocs en provenance d'un dispositif client, déterminer une version de consensus de la chaîne de blocs sur la base d'une interaction avec des nœuds du réseau à chaînes de blocs ;
recevoir (1404), en provenance du dispositif client, la demande portant sur l'interface d'utilisateur de visualisation de chaîne de blocs ;
générer (1406) l'interface d'utilisateur de visualisation de chaîne de blocs (314) d'après la version de consensus de la chaîne de blocs telle que déduite d'interactions avec des nœuds du réseau à chaînes de blocs, l'interface d'utilisateur de visualisation de chaîne de blocs comprenant une structure (431) de graphe en chaîne qui illustre visuellement au moins une partie de la chaîne de blocs et des informations de transactions relatives à des transactions qui ont eu lieu dans le réseau à chaînes de blocs, la structure (431) de graphe en chaîne comportant une chaîne de représentations de bloc sélectionnables dont chacune représente un bloc dans la chaîne de blocs ;
fournir (1408) l'interface d'utilisateur de visualisation de chaîne de blocs en vue d'un affichage sur le dispositif client en réponse à la demande portant sur l'interface d'utilisateur de visualisation de chaîne de blocs ;
déterminer une version mise à jour de consensus de la chaîne de blocs ;
générer une interface mise à jour d'utilisateur de visualisation de chaîne de blocs d'après la version mise à jour de consensus de la chaîne de blocs ; et
fournir l'interface mise à jour d'utilisateur de visualisation de chaîne de blocs au dispositif client.

2. Procédé (1400) selon la revendication 1, la version de consensus de la chaîne de blocs étant sélectionnée parmi de multiples trajets candidats en utilisant un critère de chaîne la plus longue et/ou de chaîne la plus lourde.

3. Procédé (1400) selon la revendication 1, comportant en outre les étapes consistant à :
recevoir une demande portant sur une interface d'utilisateur de renseignements de bloc en réponse à une sélection par l'utilisateur d'une représentation de bloc particulière qui correspond à un bloc particulier dans la chaîne de blocs ;
extraire de la chaîne de blocs des informations de bloc relatives au bloc particulier ;
générer l'interface d'utilisateur de renseignements de bloc d'après les informations de bloc extraites ; et
fournir l'interface d'utilisateur de renseignements de bloc en réponse à la demande portant sur l'interface d'utilisateur de renseignements de bloc.

4. Procédé (1400) selon la revendication 1, les représentations de bloc sélectionnables étant reliées avec des liaisons sélectionnables et l'interface d'utilisateur de visualisation de chaîne de blocs étant configurée pour repositionner la structure de graphe en chaîne en réponse à une sélection par l'utilisateur d'une liaison sélectionnable particulière de telle sorte qu'une représentation de bloc sélectionnable qui est la destination de la liaison sélectionnée soit positionnée au sommet de la structure de graphe en chaîne.

5. Procédé (1400) selon la revendication 1, les informations de transactions comportant des informations relatives à des transactions les plus récentes associées à la chaîne de blocs.

6. Procédé (1400) selon la revendication 1, les informations de transactions comportant des informations identifiant une transaction relatives à une première transaction, le procédé comportant en outre les étapes consistant à :
recevoir une demande portant sur une interface d'utilisateur de renseignements de transaction relative à la première transaction en réponse à une sélection par l'utilisateur des informations identifiant une transaction ;
extraire des informations de transactions relatives à la première transaction en utilisant la chaîne de blocs ;
générer l'interface d'utilisateur de renseignements de transaction d'après les informations de transactions relatives à la première transaction ; et
fournir l'interface d'utilisateur de renseignements de transaction en réponse à la demande portant sur l'interface d'utilisateur de renseignements de transaction.

7. Procédé (1400) selon la revendication 1, comportant en outre les étapes consistant à :
recevoir, en provenance du dispositif client, une demande portant sur une interface d'utilisateur de liste de blocs ;
extraire de la chaîne de blocs des informations de bloc ;
générer l'interface d'utilisateur de liste de blocs d'après les informations de bloc extraites ; et
fournir l'interface d'utilisateur de liste de blocs en réponse à la demande portant sur l'interface d'utilisateur de liste de blocs.

8. Procédé (1400) selon la revendication 1, comportant en outre les étapes consistant à :
recevoir, en provenance du dispositif client, une demande portant sur une interface d'utilisateur de liste de transactions ;
extraire des informations de transactions en utilisant la chaîne de blocs ;
générer l'interface d'utilisateur de liste de transactions d'après les informations de transactions extraites ; et
fournir l'interface d'utilisateur de liste de transactions en réponse à la demande portant sur l'interface d'utilisateur de liste de transactions.

9. Procédé (1400) selon la revendication 1, comportant en outre les étapes consistant à :
recevoir, en provenance du dispositif client, une demande portant sur une interface d'utilisateur de liste de comptes ;
extraire des informations de comptes relatives à des nœuds du réseau à chaînes de blocs en utilisant la chaîne de blocs ;
générer l'interface d'utilisateur de liste de comptes d'après les informations de comptes extraites ; et
fournir l'interface d'utilisateur de liste de comptes en réponse à la demande portant sur l'interface d'utilisateur de liste de comptes.

10. Procédé (1400) selon la revendication 1, comportant en outre les étapes consistant à :
recevoir, en provenance du dispositif client, une demande portant sur une interface d'utilisateur de liste de contrats ;
extraire des informations de contrats en utilisant la chaîne de blocs ;
générer l'interface d'utilisateur de liste de contrats d'après les informations de contrats extraites ; et
fournir l'interface d'utilisateur de liste de contrats en réponse à la demande portant sur l'interface d'utilisateur de liste de contrats.

11. Support de stockage non transitoire lisible par ordinateur couplé à un ou plusieurs ordinateurs et dans lequel sont stockées des instructions exécutables par l'ordinateur ou les ordinateurs pour réaliser le procédé (1400) selon l'une quelconque des revendications 1 à 10.

12. Système comportant :
un ou plusieurs ordinateurs ; et
une ou plusieurs mémoires lisibles par ordinateur couplées à l'ordinateur ou aux ordinateurs et dans lesquelles sont stockées des instructions exécutables par l'ordinateur ou les ordinateurs pour réaliser le procédé (1400) selon l'une quelconque des revendications 1 à 10.
